# EUROPÄISCHE PATENTANMELDUNG

(11) **EP 4 011 474 A1**
(43) Veröffentlichungstag der Anmeldung: **15.06.2022**
(21) Anmeldenummer: 21212790.6
(22) Anmeldetag: 07.12.2021
(51) Int. Cl.: B01D 19/00, F24D 19/08

(54) **AUSTREIBUNG ENTZÜNDLICHER GASE AUS EINEM HEIZ/SOLEKREISLAUF**

(30) Priorität: 08.12.2020 DE 102020132580
(71) Anmelder: Vaillant GmbH, 42859 Remscheid (DE)
(72) Erfinder: Wohlfeil, Arnold, 42799 Leichlingen (DE)
(74) Vertreter: Popp, Carsten

(57) **Zusammenfassung**

Austreibvorrichtung und Austreibverfahren für ein Wärmeträgerfluid der Klima-Heizungs-Lüftungstechnik, aufweisend einen als Blasensäule (7) ausgestalteten Behälter (3) mit zwei Anschlüssen für einen ein Wärmeträgerfluid-führenden Kreislauf und einem Anschluss für Austreibgas (4), Mittel zur Trennung von Gasbestandteilen und Flüssigkeit unter Zurückhaltung der Flüssigkeit im Wärmeträgerfluid-führenden Kreislauf, ferner mindestens einen Abzug für abgeschiedene Gasbestandteile (12), wobei ein Abzug für Austreibgas im oberen Bereich des Behälters (3) vorgesehen ist, im unteren Bereich des Behälters (3) eine Aufgabevorrichtung für Wärmeträgerfluid und eine Aufgabevorrichtung (6) für Abtreibgas (4) vorgesehen sind, im oberen Bereich des Behälters eine Auffangvorrichtung (8, 9) für Wärmeträgerfluid vorgesehen ist, die Auffangvorrichtung für Wärmeträgerfluid mit einem Abzug (10) für Wärmeträgerfluid aus dem Behälter (3) verbunden ist.

## Beschreibung

Die Erfindung betrifft die Austreibung entzündlicher Gase in einem Heizungskreislauf oder Kühlsolekreislauf. Es ist bekannt, dass Heizkreisläufe gelegentlich entlüftet werden müssen, da sich Luft im System ansammeln kann. Meist geschieht dies durch Undichtigkeiten an erhöhten Stellen im Heizkreislauf, bei denen eine Undichtigkeit in Verbindung mit Unterdruck zum Ansaugen von Luft in den Wasserkreislauf führt. In manchen Fällen handelt es sich auch um Luft, die in Nachfüllwasser gelöst ist und die bei dessen Erwärmung freigesetzt wird. Dasselbe gilt für Sole-Split-Anlagen, bei denen sich Sole im Heizkreis befindet.

Befindet sich Luft im System, führt dies oftmals zu Funktionsstörungen und Schäden an Anlagenkomponenten durch Korrosionsprozesse. Gerade Bauteile mit Verschleißteilen wie zum Beispiel Umwälzpumpen sind hiervon betroffen. Außerdem werden Umwälzabläufe durch etwaige Luftpolster behindert und die Wärmeverteilung an sich gestört oder sogar unterbrochen. Verbunden sind die Fehlfunktionen dabei oftmals mit Fließ- und Kavitationsgeräuschen. Gebräuchlich sind daher Entlüfter, mit denen solche Luft aus dem System entfernt werden kann. Problematisch werden solche Entlüfter dann, wenn sich nicht nur Luft im System befindet.

In neueren Kältekreisen, zum Beispiel in Wärmepumpen, werden keine Sicherheitskältemittel mehr verwendet, sondern entzündliche natürliche Arbeitsfluide wie z.B. R290 und R1270. Deren Arbeitsdruck ist sowohl auf der Wärme aufnehmenden Seite als auch auf der Wärme abgebenden Seite regelmäßig höher als der übliche Druck in Heizkreisläufen. Je nach Schaltung und Betriebsweise können Leckagen im Kondensator oder Verdampfer daher zum Austritt von gasförmigem brennbarem Arbeitsfluid aus dem Kältekreis in den Heiz-oder Solekreislauf führen. Dies würde nachfolgend beim Entlüften dazu führen, dass ein zündfähiges Gemisch austreten könnte. Das darf aus Sicherheitsgründen keinesfalls geschehen. Dasselbe gilt natürlich auch für herkömmliche, brennbare Kältemittel wie z.B. R32, sofern solche noch zur Anwendung gelangen.

Im Stand der Technik verhindert man dies durch Verwendung von doppelwandigen Edelstahl-Wärmetauschern als Kondensatoren und Verdampfer. Im Falle einer Leckage tritt das brennbare Arbeitsfluid in den Zwischenraum der beiden Wandungen ein und wird dort separat abgesaugt und einer Nachbehandlung unterworfen. Diese Nachbehandlung kann auch entfallen, wenn es einen sicheren Weg in die Atmosphäre gibt, bei dem eine Vermischung mit Luft in einer Menge erfolgt, dass sich ein zündfähiges Gemisch nicht bilden kann. Der Zwischenraum beträgt dabei meist nur wenige Zehntelmillimeter. Diese Bauformen sind aber einerseits teuer und andererseits behindem sie den Wärmeübergang, weil der Zwischenraum wie eine Wärmedämmung wirkt, sie verringern also den erreichbaren Wirkungsgrad. Im Übrigen können Leckagen auch beide Wände betreffen.

Wünschenswert wäre es deshalb, wenn auf die doppelwandigen Wärmeübertrager verzichtet und im Falle von Leckagen das in den Heiz- oder Solekreislauf eingetretene Arbeitsfluid sicher abgeschieden werden könnte. Das abzuscheidende Arbeitsfluid kann dabei entweder in gelöster Form oder in Form von Gasblasen vorliegen, im Falle von Gasblasen handelt es sich bei sehr kleinen Leckagen dabei um sehr feine Gasblasen.

Hierfür wird vom Verfahren der Austreibung Gebrauch gemacht, was vor allem im Bereich der Trinkwasseraufbereitung und der Grundwassersanierung Stand der Technik ist. Im Falle der Trinkwasseraufbereitung sei hierbei auf die DE 91 06 125 U1, die DE 10 2006 056 188 A1 und die DE 10 2017 107 143 A1 verwiesen. Meist mit dem Ziel der Entsäuerung, vor allem im Rahmen der Kohlensäure-Strippung und/oder zur Strippung von leichtflüchtigen Substanzen, wie Kohlenwasserstoffen, Lösemitteln oder Radon, wird hierbei Luft von unten in einen mit Trinkwasser gefüllten Behälter gedrückt und oberhalb des Wasserspiegels wieder entnommen.

Probleme bereitet dabei einerseits die Neigung zum Aufschäumen. In vielen Fällen muss der Flüssigkeit daher ein Entschäumer zugesetzt werden. In den meisten Fällen handelt es sich bei diesen Vorgängen um Batch-Betriebsweisen, kontinuierliche Verfahren leiden darunter, dass Tropfen und Schaum, beim Einsatz von Entschäumer auch das Entschäumungsmittel von der Strömung mitgerissen werden. Hierzu bedarf es ggf. weiterer Abscheidemittel.

Die Flüchtigkeit von Kohlenwasserstoffen wird in wässrigen Lösungen durch den Henry-Koeffizienten beschrieben, der stark temperaturabhängig ist. Während es in Trinkwasser oft erwünscht ist, dass der Sauerstoffgehalt hoch und der Kohlendioxidgehalt niedrig ist, muss in Heizkreisläufen der Sauerstoffgehalt möglichst gering sein, um Korrosion zu vermeiden. Aus diesem Grund können die für die Trinkwasserstrippung entwickelten Konzepte für die Entfernung von kohlenwasserstoffhaltigen Kontaminationen des Heizkreiswassers nicht verwendet werden.

Aufgabe der Erfindung ist es daher, eine Vorrichtung und ein Verfahren zur Abscheidung entzündlicher Gase in einem Heizungskreislauf oder Kühlsolekreislauf bereitzustellen.

Die Aufgabe wird gelöst durch eine Austreibvorrichtung für ein Gas aus einem Wärmeträgerfluid der Klima-Heizungs-Lüftungstechnik, aufweisend
- einen als Blasensäule ausgestalteten Behälter mit zwei Anschlüssen für einen ein Wärmeträgerfluid-führenden Kreislauf und einem Anschluss für Austreibgas,
- Mittel zur Trennung von Gasbestandteilen und Flüssigkeit unter Zurückhaltung der Flüssigkeit im Wärmeträgerfluid-führenden Kreislauf,
- ferner mindestens einen Abzug für abgeschiedene Gasbestandteile, wobei
- ein Abzug für Austreibgas im oberen Bereich des Behälters vorgesehen ist,
- im unteren Bereich des Behälters eine Aufgabe- oder Abzugsvorrichtung für Wärmeträgerfluid und eine Aufgabevorrichtung (6) für Abtreibgas (4) vorgesehen sind,
- im oberen Bereich des Behälters eine Auffang- oder Zugabevorrichtung für Wärmeträgerfluid vorgesehen ist,
- die Auffangvorrichtung für Wärmeträgerfluid mit einer Aufgabe- oder Abzugsvorrichtung für Wärmeträgerfluid aus dem Behälter verbunden ist.

In einer speziellen Ausgestaltung ist vorgesehen
- ein als Blasensäule (7) ausgestalteter Behälter (3) mit zwei Anschlüssen für einen ein Wärmeträgerfluid-führenden Kreislauf und einem Anschluss für Austreibgas (4), aufweisend
- Mittel zur Trennung von Gasbestandteilen und Flüssigkeit unter Zurückhaltung der Flüssigkeit im Wärmeträgerfluid-führenden Kreislauf,
- ferner mindestens einen Abzug für abgeschiedene Gasbestandteile (12),
- wobei ein Abzug für Austreibgas im oberen Bereich des Behälters (3) vorgesehen ist, und
- im unteren Bereich des Behälters (3) eine Aufgabevorrichtung für Wärmeträgerfluid und eine Aufgabevorrichtung (6) für Abtreibgas (4) vorgesehen sind,
- im oberen Bereich des Behälters eine Auffangvorrichtung (8, 9) für Wärmeträgerfluid vorgesehen ist, die mit einem Abzug (10) für Wärmeträgerfluid aus dem Behälter (3) verbunden ist.

In weiteren Ausgestaltungen ist vorgesehen, dass
- als Auffangvorrichtung für Wärmeträgerfluid ein Überlauf mit einem Siphon als Gasverschluss vorgesehen ist,
- als Zugabevorrichtung für Austreibgas ein Lochboden oder ein poröser Keramikkörper vorgesehen ist,
- als Mittel zur Trennung von Gasbestandteilen ein Nebelabscheider oder Tropfenabscheider vorgesehen ist,
- als Abzug für abgeschiedene Gasbestandteile ein Regelventil vorgesehen ist.

In einer weiteren Ausgestaltung ist vorgesehen, dass oberhalb des Nebel- oder Tropfenabscheiders ein Leervolumen im Blasensäulebehälter als Beruhigungszone vorgesehen ist, und in dieser Beruhigungszone ein Messgerät zur kontinuierlichen Messung der Konzentration brennbarer Gasbestandteile sowie zum Druck vorgesehen ist. Weiterhin ist vorgesehen, dass bei einem Anstieg der Konzentration zur unteren Zündgrenze hin die eingebrachte Abscheidegasmenge erhöht wird, indem das Messsignal auf einen Kompressor gegeben wird, dessen Förderleistung solange erhöht wird, bis die Konzentration brennbarer Gasbestandteile wieder sinkt. Weiterhin ist vorgesehen, dass über die Messung des Absolutdrucks das erhaltene Druckmesssignal zur Steuerung eines Regelventils zum Ablassen des Abgases betätigt wird.

Die Flüssigkeit des Heizungskreislaufs oder Kühlsolekreislaufs und der zugegebene Gasstrom werden in der Blasensäule im Gleichstrom aufwärts oder im Gegenstrom abwärts geführt. Hierbei findet einerseits ein Stoffaustausch zwischen den in der Flüssigkeit gelösten Gasen und den Gasblasen statt, andererseits verbinden sich die feinen Blasen, die durch die Leckage in die Flüssigkeit gelangt sind, mit den aufsteigenden Blasen durch Koagulation. Die Blasensäule hat dabei eine solche Höhe, dass die Gasblasen des Austreibgases sich beim Aufstieg vergrößern und sich auch miteinander verbinden, d.h. koagulieren.

Die erzeugten Blasen haben dabei typischerweise eine Größe zwischen 2 und 5 Millimeter und steigen mit einer Geschwindigkeit in der Blasensäule 7, die geringfügig höher ist als die Aufstiegs- oder Abstiegsgeschwindigkeit des strömenden Wärmeträgerfluids. Hierbei geben sie gelöste entzündbare Bestandteile in die Blasen ab und die Blasen nehmen feinperlig gelöste entzündliche Gasblasen aus dem Wärmeträgerfluid auf.

Im Normalfall wird ein homogenes Blasenregime angestrebt, sofern in seltenen Fällen größere Mengen entzündlichen Gases auszutreiben sind, kann die Blasenmenge soweit erhöht werden, dass ein heterogenes Blasenregime entsteht, was den Stoffaustausch verbessert, jedoch auch mehr Kompressionsenergie benötigt.

Die Strömungsquerschnitte sind so ausgelegt, dass die Aufstiegsgeschwindigkeit der Blasen die der strömenden Flüssigkeit übersteigt. Typische Behälterhöhen für die vorgesehene Verwendung betragen zwischen 0,4 und 4 Meter.

Rohrleitungen im Heizungsbau werden üblicherweise auf eine Strömungsgeschwindigkeit von 0,5 bis 5 Meter pro Sekunde ausgelegt. In der Blasensäule ist der Querschnitt so aufzuweiten, dass sich typischerweise eine Strömungsgeschwindigkeit der Flüssigkeit auf 0,05 bis 0,2 Meter pro Sekunde einstellt. Da ein Teil des Rohrquerschnitts für Gasblasen benötigt wird, vergrößert sich für die aufsteigende Flüssigkeit entsprechend der erforderliche Behälterdurchmesser. Um einen möglichst großen Regelungsbereich abzudecken, ist die Behälterquerschnittsfläche bezogen auf die Nenn-Strömungsgeschwindigkeit der Flüssigkeit mindestens zu verdoppeln.

Im oberen Teil der Blasensäule wird die Flüssigkeit durch einen Überlauf mit Siphon abgezogen. Bei der Regelung der Austreibgasmenge ist bei Mengenregulierung durch Druckerhöhung zu beachten, dass die Flüssigkeit in der Blasensäule nicht soweit verdrängt wird, dass der Überlauf und der Siphon trocken fallen. Einer Erhöhung der Austreibgasmenge durch Druckerhöhung muss daher ein entsprechender Gasabzug folgen, außerdem müssen die Druckverhältnisse im Heiz- bzw. Solekreislauf entsprechend angeglichen werden.

Die Erfindung betrifft auch das Verfahren zum Austreiben und Abscheiden der gasförmigen oder gelösten Gase aus dem Wärmeträgerfluid eines Heizungskreislaufs oder Kühlsolekreislaufs der Klima-Heizungs-Lüftungstechnik mittels der oben beschriebenen Vorrichtung. Hierbei ist vorgesehen, dass
- ein Wärmeträgerfluid in einer Blasensäule zusammen mit einem Austreibgas unter erhöhtem Druck mit Gasblasen in Kontakt gebracht wird und
- das beladene Austreibgas vom gereinigten Wärmeträgerfluid im oberen Bereich der Blasensäule getrennt wird und beide getrennt voneinander aus der Blasensäule abgezogen werden.
- die Zugabemenge an Austreibgas in die Blasensäule dadurch geregelt wird, dass eine Messung der Konzentration entzündlicher Bestandteile vor dem Abzug des Austreibgases aus der Blasensäule erfolgt,
- wobei die Zugabemenge an Austreibgas soweit erhöht oder verringert wird, dass die Konzentration bezüglich der Zündgrenze vor dem Abzug sicher unterschritten wird.

Praktisch wird also die Konzentration oberhalb der Flüssigkeitsabscheidung gemessen und die Gasmenge wird ggf. erhöht, was durch Ansteuerung eines Kompressors geschieht, sofern ein solcher verwendet wird. Falls Druckluft verwendet werden kann, kann auch einfach ein Druckregelventil geöffnet werden. Hierbei sind aber stets die Druckverhältnisse im gesamten System zu berücksichtigen.

In einer Ausgestaltung des Verfahrens ist vorgesehen, dass das Wärmeträgerfluid in einer Blasensäule (7) zusammen mit einem Austreibgas im Gleichstrom aufwärts mit Gasblasen in Kontakt gebracht wird. Ebenfalls möglich ist, dass in unterschiedlichen Fällen eine Umschaltung von Gegenstrombetrieb auf Gleichstrombetrieb vorgesehen wird.

In einer weiteren Ausgestaltung des Verfahrens ist vorgesehen, dass der Betrieb im Bypass zum Hauptstrom des Heizungs- und Kühlsolekreislaufs erfolgt.

In einer weiteren Ausgestaltung des Verfahrens ist vorgesehen, dass der Betrieb in regelmäßigen Zeitintervallen erfolgt, wobei die Intervalle beendet werden, wenn kein entzündliches Gas in der Messung 15 ermittelt wird.

Die Erfindung wird nachfolgend anhand zweier Prinzipskizzen näher erläutert. Hierbei zeigen:
Fig. 1 eine Austreibvorrichtung für den ständigen oder intermittierenden Gleichstrombetrieb,
Fig. 2 eine Austreibvorrichtung für den ständigen oder intermittierenden Gegenstrombetrieb.

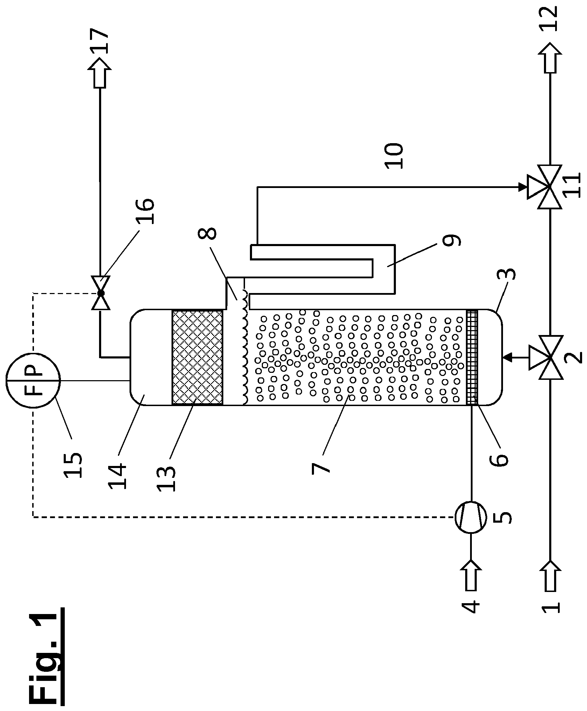

Fig. 1 zeigt eine Austreibvorrichtung mit einem Wärmeträgerfluid-Zulauf 1, einem Drei-Wege-Abzweigventil 2 für Wärmeträgerfluid aus einer Hauptleitung in einen Blasensäulebehälter 3, in den ein Wärmeträger-Fluidstrom eingeleitet wird und der eine Wärmeträgerfluid-Flüssigkeitssäule aufweist. In diesen Blasensäulebehälter 3 wird Austreibgas 4 durch einen Kompressor 5 und einen Begaser 6 in die Blasensäule 7 eingeleitet.

Im oberen Bereich befindet sich ein Überlauf 8, der in einen Siphon 9 mündet. Das von entzündlichen Gasen befreite Wärmeträgerfluid wird aus dem Siphon 9, der einen Gasabschluss bildet vom Wärmeträgerfluid-Abzug 10 abgezogen und über das Drei-Wege-Zulaufventil 11 wieder in den Hauptstrom zurückgeführt. Das entgaste Wärmeträgerfluid 12 wird danach bestimmungsgemäß weiterverwendet.

Oberhalb des Überlaufs 8 befindet sich über der Blasensäule 7 der Tropfenabscheider 13, oberhalb des Tropfenabscheiders 13 befindet sich eine Beruhigungszone 14 mit einer Vorrichtung zur Konzentrations- und Druckmessung 15. Die Druckmessung regelt ein Druckregelventil, das mit dem Abgasstrom 17 verbunden ist, die Konzentrationsmessung prüft, ob sich die Konzentration entzündlicher Gase unterhalb der Zündgrenze befindet. Je nach dem gemessenen Absolutdruck muss dabei auf die Zündgrenze nach der Entspannung des Abgases 17 abgestellt werden.

Ein entsprechendes Signal wird auf den Kompressor 5 gegeben, der die Abscheidegasmenge entsprechend erhöht oder verringert. Sollte die maximal einstellbare Gasmenge nicht ausreichen, um Zündfähigkeit sicher zu vermeiden, muss die Umlaufmenge des Wärmeträgerfluids entsprechend reduziert werden.

Sofern als Austreibgas Luft verwendet wird und es sich bei dem auszutreibenden Gas um ein ungiftiges und klimaunschädliches Alkan handelt, kann das Abgas gefahrlos ins Freie geleitet werden.

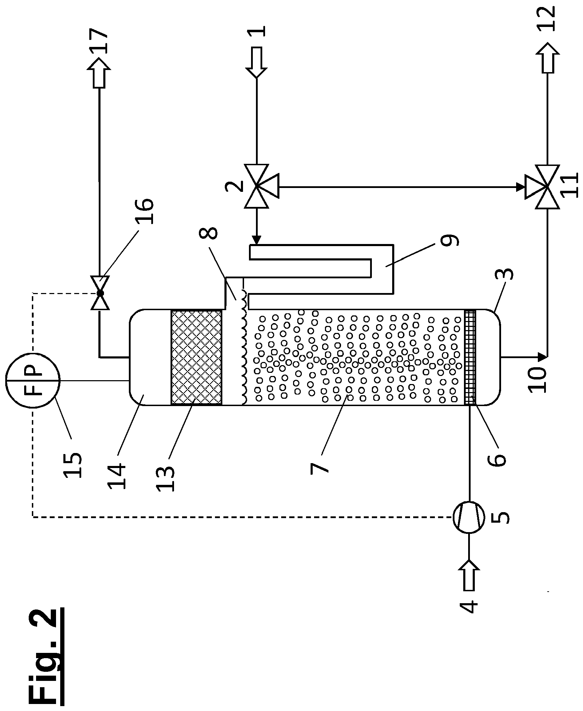

Fig. 2 zeigt die gleiche Anordnung, bei der das Wärmeträgerfluid im Gegenstrom zu dem Abtreibgas geführt wird. In diesem Fall ist die Strömungsgeschwindigkeit entsprechend herabzusetzen, damit stets gewährleistet ist, dass die Blasen aufsteigen und sich keine Staugebiete einstellen. Der Vorteil ist dabei, dass sich die Verweilzeit der Blasen in der Blasensäule verlängert und ein höherer Stoffaustausch erreicht werden kann. Die Blasensäule kann daher verkürzt dimensioniert werden. Das Wärmeträgerfluid wird dabei von oben über den Siphon 9 und den Überlauf 8 aufgegeben und unterhalb der Aufgabe für Abtreibgas im Abzug 10 abgezogen.

Selbstverständlich können die in Fig. 1 und Fig. 2 gezeigten Anordnungen auch kombiniert werden, so dass in einigen Fällen Gegenstrombetrieb und in anderen Fällen Gleichstrombetrieb möglich ist, ferner kann auch vorgesehen werden, dass nur ein Teilstrom aus dem Heizungs- oder Kühlsolekreislauf abgezogen wird und die Austreibung des entzündlichen Gases im Bypass erfolgt. Die entsprechenden Rohrleitungsverschaltungen sind hier nicht gezeigt. Ebenfalls möglich ist, dass die Austreibung nur in Intervallen erfolgt und nur dann fortlaufend weiterbetrieben wird, wenn sich bei der Messung der Konzentration im abgeschiedenen Austreibgas überhaupt entzündliche Gase finden. Ebenfalls möglich ist es, den Gas-Flüssigkontakt durch Packungen oder Einbauten zu verstärken.

### Bezugszeichenliste

- 1: Wärmeträgerfluid-Zulauf
- 2: Drei-Wege-Abzweigventil
- 3: Blasensäulebehälter
- 4: Austreibgas
- 5: Kompressor
- 6: Begaser
- 7: Blasensäule
- 8: Überlauf
- 9: Siphon
- 10: Wärmeträgerfluid-Abzug
- 11: Drei-Wege-Zulaufventil
- 12: Entgastes Wärmeträgerfluid
- 13: Tropfenabscheider
- 14: Beruhigungszone
- 15: Konzentrations- und Druckmessung
- 16: Druckregelventil
- 17: Abgas

## Patentansprüche

1. Austreibvorrichtung für ein Wärmeträgerfluid der Klima-Heizungs-Lüftungstechnik, aufweisend
- einen als Blasensäule (7) ausgestalteten Behälter (3) mit zwei Anschlüssen für einen ein Wärmeträgerfluid-führenden Kreislauf und einem Anschluss für Austreibgas (4),
- Mittel zur Trennung von Gasbestandteilen und Flüssigkeit unter Zurückhaltung der Flüssigkeit im Wärmeträgerfluid-führenden Kreislauf,
- ferner mindestens einen Abzug für abgeschiedene Gasbestandteile (12),
**dadurch gekennzeichnet, dass**
- ein Abzug für Austreibgas im oberen Bereich des Behälters (3) vorgesehen ist,
- im unteren Bereich des Behälters (3) eine Aufgabe- oder Abzugsvorrichtung für Wärmeträgerfluid und eine Aufgabevorrichtung (6) für Abtreibgas (4) vorgesehen sind,
- im oberen Bereich des Behälters eine Auffang- oder Zugabevorrichtung (8, 9) für Wärmeträgerfluid vorgesehen ist,
- die Auffangvorrichtung für Wärmeträgerfluid mit einem Abzug (10) für Wärmeträgerfluid aus dem Behälter (3) verbunden ist.

2. Austreibvorrichtung nach Anspruch 1, aufweisend
- einen als Blasensäule (7) ausgestalteten Behälter (3) mit zwei Anschlüssen für einen ein Wärmeträgerfluid-führenden Kreislauf und einem Anschluss für Austreibgas (4),
- Mittel zur Trennung von Gasbestandteilen und Flüssigkeit unter Zurückhaltung der Flüssigkeit im Wärmeträgerfluid-führenden Kreislauf,
- ferner mindestens einen Abzug für abgeschiedene Gasbestandteile (12),
- wobei ein Abzug für Austreibgas im oberen Bereich des Behälters (3) vorgesehen ist,
**dadurch gekennzeichnet, dass**
- im unteren Bereich des Behälters (3) eine Aufgabevorrichtung für Wärmeträgerfluid und eine Aufgabevorrichtung (6) für Abtreibgas (4) vorgesehen sind,
- im oberen Bereich des Behälters eine Auffangvorrichtung (8, 9) für Wärmeträgerfluid vorgesehen ist, die mit einem Abzug (10) für Wärmeträgerfluid aus dem Behälter (3) verbunden ist.

3. Austreibvorrichtung nach Anspruch 2, **dadurch gekennzeichnet, dass** als Auffangvorrichtung für Wärmeträgerfluid ein Überlauf (8) mit einem Siphon (9) als Gasverschluss vorgesehen ist.

4. Austreibvorrichtung nach einem der Ansprüche 1 bis 3, **dadurch gekennzeichnet, dass** als Aufgabevorrichtung (6) für Austreibgas ein Lochboden oder ein poröser Keramikkörper vorgesehen ist.

5. Austreibvorrichtung nach einem der Ansprüche 1 bis 4, **dadurch gekennzeichnet, dass** als Mittel zur Trennung von Gasbestandteilen ein Nebelabscheider oder Tropfenabscheider (13) vorgesehen ist.

6. Austreibvorrichtung nach einem der Ansprüche 1 bis 5, **dadurch gekennzeichnet, dass** als Abzug für abgeschiedene Gasbestandteile ein Regelventil (16) vorgesehen ist.

7. Austreibvorrichtung nach einem der Ansprüche 1 bis 6, **dadurch gekennzeichnet, dass** oberhalb des Nebel- oder Tropfenabscheiders (13) ein Leervolumen im Behälter (3) als Beruhigungszone (14) vorgesehen ist.

8. Austreibvorrichtung nach einem der Ansprüche 1 bis 7, **dadurch gekennzeichnet, dass** zum Erzeugen des Drucks im Austreibgas (4) vor der Aufgabevorrichtung (6) für Austreibgas ein regelbarer Kompressor (5) vorgesehen ist, mit dem Austreibgasmenge und Austreibgasdruck eingestellt werden können.

9. Austreibvorrichtung nach einem der Ansprüche 1 bis 8, **dadurch gekennzeichnet, dass** im Gasweg zwischen dem Mittel (13) zur Trennung von Gasbestandteilen und Flüssigkeit im Behälter und dem Regelventil (16) am Abzug für Abtreibgas eine Messvorrichtung (15) für die kontinuierliche Messung von Druck und Konzentration entzündlicher Gasbestandteile vorgesehen ist.

10. Verfahren zum Austreiben und Abscheiden von entzündlichen gasförmigen oder gelösten Gasen aus dem Wärmeträgerfluid eines Heizungskreislaufs oder Kühlsolekreislaufs der Klima-Heizungs-Lüftungstechnik in einer Vorrichtung gemäß einem der Ansprüche 1 bis 9, **dadurch gekennzeichnet, dass**
- ein Wärmeträgerfluid in einer Blasensäule (7) zusammen mit einem Austreibgas mit Gasblasen unter erhöhtem Druck in Kontakt gebracht wird und
- das beladene Austreibgas vom gereinigten Wärmeträgerfluid im oberen Bereich der Blasensäule getrennt wird und beide getrennt voneinander aus der Blasensäule abgezogen werden.
- die Zugabemenge an Austreibgas in die Blasensäule dadurch geregelt wird, dass eine Messung (15) der Konzentration entzündlicher Bestandteile vor dem Abzug (17) des Austreibgases aus der Blasensäule erfolgt,
- wobei die Zugabemenge an Austreibgas (4) soweit erhöht oder verringert wird, dass die Konzentration bezüglich der Zündgrenze vor dem Abzug (17) sicher unterschritten wird.

11. Verfahren nach Anspruch 10, **dadurch gekennzeichnet, dass** das Wärmeträgerfluid in einer Blasensäule (7) zusammen mit einem Austreibgas im Gleichstrom aufwärts mit Gasblasen in Kontakt gebracht wird.

12. Verfahren nach einem der Ansprüche 10 oder 11, **dadurch gekennzeichnet, dass** eine Umschaltung von Gegenstrombetrieb auf Gleichstrombetrieb in Abhängigkeit der abzuscheidenden Gasmengen entzündlichen Gases vorgesehen wird.

13. Verfahren nach einem der Ansprüche 10 bis 12, **dadurch gekennzeichnet, dass** der Betrieb im Bypass zum Hauptstrom des Heizungs- und Kühlsolekreislaufs erfolgt.

14. Verfahren nach einem der Ansprüche 10 bis 13, **dadurch gekennzeichnet, dass** der Betrieb in regelmäßigen Zeitintervallen erfolgt, wobei die Intervalle beendet werden, wenn kein entzündliches Gas in der Messung 15 ermittelt wird.
